# EUROPÄISCHE PATENTSCHRIFT

(11) **EP 2 784 208 B1**
(45) Veröffentlichungstag und Bekanntmachung des Hinweises auf die Patenterteilung: **22.01.2020**
(21) Anmeldenummer: 14000934.1
(22) Anmeldetag: 14.03.2014
(51) Int. Cl.: D06F 95/00, D06F 67/04

(54) **Verfahren zum Vermessen von Wäschestücken**
Method measuring laundry items
Procédé de mesure de linge

(30) Priorität: 27.03.2013 DE 102013005251
(43) Veröffentlichungstag der Anmeldung: 01.10.2014
(73) Patentinhaber: Herbert Kannegiesser GmbH, 32602 Vlotho (DE)
(72) Erfinder: Olivieri, Andreas, 32425 Minden (DE); Schormann, Frank, 32602 Vlotho (DE); Körtner, Norbert, 32545 Bad Oeynhausen (DE); Heinz, Engelbert, 32602 Vlotho (DE)
(74) Vertreter: Möller, Friedrich

(56) Entgegenhaltungen:
- EP-A1- 0 982 428
- EP-A2- 2 113 606
- DE-A1- 3 912 977
- DE-A1- 4 014 877
- DE-A1- 4 143 069
- GB-A- 1 556 077
- US-A- 4 774 505

## Beschreibung

Die Erfindung betrifft ein Verfahren zum Vermessen von Wäschestücken gemäß dem Oberbegriff des Anspruchs 1.

Wäschestücke, wie sogenannte Flachwäsche, aber auch Kleidungsstücke, werden mit zwei benachbarten Ecken einer Kante bzw. eines Randes an zwei einzelnen Klammerwagen hängend einer Behandlungseinrichtung zugeführt. Vorzugsweise werden die Wäschestücke vor der Behandlungseinrichtung zwischengespeichert. Diese Zwischenspeicherung erfolgt sortiert in Speicherstrecken eines Speichers. Im Fachjargon spricht man von sortenreinen Zwischenspeichern, Bevorzugt werden die Wäschestücke nach ihrer Art, beispielsweise Bezug, Bettlaken, Kopfkissenbezug, Tischdecke oder dergleichen, sortiert, gegebenenfalls aber auch nach Kittel, Hemden, Hosen oder dergleichen.

Bei bekannten Verfahren und Vorrichtungen dieser Art werden die Klammerwagen einzeln in einen diese weitertransportierenden Klinkenförderer eingeschleust, was zeitaufwendig ist. Außerdem ist die zum Sortieren erforderliche Vermessung der Wäschestücke bei bekannten Verfahren und Vorrichtungen unvollkommen. Aus GB 1 556 077 A ist bekannt, dass zum Vermessen der Wäschestücke deren gesamte Fläche abgescannt und bestimmt wird. Das komplette Abscannen der Wäschestücke ist jedoch aufwendig und besonders zeitintensiv.

Der Erfindung liegt die Aufgabe zugrunde, ein Verfahren zum Vermessen von Wäschestücken zu schaffen, das hohe Durchsatzleistungen mit großer Zuverlässigkeit ermöglicht.

Ein Verfahren zur Lösung dieser Aufgabe weist die Maßnahmen des Anspruchs 1 auf. Demnach erfolgt das Vermessen von Wäschestücken mit einer Messeinrichtung, die den Durchhang bzw. die Schlaufe des mit benachbarten Ecken in Klammerwagen gehaltenen Wäschestücks und die tiefste bzw. unterste Stelle des von den Klammerwagen herunterhängenden Wäschestücks misst. Aus dem Durchhang bzw. der Schlaufe der an die Klammerwagen mit den Ecken gehaltene Kante oder des Rands lässt sich die Breite des Wäschestücks mindestens qualitativ ermitteln. Aus der tiefsten Stelle des von dem Klammerwagen herunterhängenden Wäschestücks lässt sich die Länge desselben mindestens qualitativ ermitteln. Von der gleichen, vorzugsweise einzigen, Messeinrichtung lassen sich so zwei charakteristische Werte des Wäschestücks ermitteln, die zur Sortierung ausreichen. Die Wäschestücke können daraufhin sortenrein in die jeweilige Bahn des Speichers bzw. Zwischenspeichers eingeschleust werden.

Die Vermessung des an gegenüberliegenden Ecken einer Kante oder eines Randes an Klammerwagen hängenden Wäschestücks findet bei definiertem, gleich bleibenden Abstand zwischen den benachbarte Ecken haltenden Klammerwagen statt. Jedes Wäschestück wird einzeln mit definiertem Abstand der benachbarten Ecken des vorderen oder oberen Randes bzw. der vorderen oder oberen Kante an der Messeinrichtung vorbeitransportiert. Infolge des gleichen Abstands der benachbarten Ecken der Kante oder des Randes sind für jedes Wäschestück, und zwar auch unterschiedlich große Wäschestücke, gleiche Messbedingungen geschaffen. Dadurch lassen sich reproduzierbare Messungen durchführen. Aufgrund des definierten bekannten Abstands der Ecken der Kante oder des Randes jedes Wäschestücks lassen sich aus den Messwerten, und zwar sowohl der Durchhangtiefe als auch der untersten Ecke des Wäschestücks, zuverlässig Rückschlüsse auf die Art des jeweiligen Wäschestücks ziehen, so dass dieses eindeutig identifiziert und sortenrein sortiert werden kann. Der bekannte definierte Abstand der Ecken des jeweiligen Wäschestücks kann aber auch herangezogen werden, um rechnerisch mit größtmöglicher Annäherung die Breite und die Länge des jeweiligen Wäschestücks zu ermitteln.

Vorzugsweise stellt die Messeinrichtung mindestens annähernd gleichzeitig den Durchhang, insbesondere die Tiefe des Durchhangs der Kante des jeweiligen Wäschestücks, und die unterste Ecke desselben fest. Dadurch kann die zumindest qualitative Vermessung des Wäschestücks, die ausreicht, um eine gezielte Sortierung desselben vorzunehmen, kurzzeitig in einem Arbeitsgang erfolgen.

Eine bevorzugte Ausgestaltung des Verfahrens sieht es vor, dass der Messwert für den Durchhang bzw. die Schlaufe, insbesondere die Tiefe des Durchhangs oder der Schlaufe, der Kante jedes Wäschestücks und der Messwert der tiefsten Stelle des Wäschestücks ins Verhältnis gesetzt werden. Beispielsweise wird der Quotient aus dem Messwert für die Tiefe des Durchhangs oder der Schlaufe und die tiefste Stelle des Wäschestücks (oder umgekehrt) gebildet. Dieses Verhältnis bzw. der Quotient oder Verhältniswert werden herangezogen, um die Art des Wäschestücks zu bestimmen und/oder das Wäschestück zu identifizieren. Beispielsweise kann anhand des Verhältsniswerts durch Vergleich mit in einem Speicher einer Auswertelektronik hinterlegten Referenzwerts festgestellt werden, ob es sich um Bettlaken, einen Bettbezug oder einen Kopfkissenbezug handelt. Durch die Bildung des Verhältniswerts kann jedes Wäschestück zuverlässig bestimmt und/oder identifiziert werden, auch wenn anhand der Tiefe des Durchhangs oder der Schlaufe und der tiefsten Stelle des Wäschestücks die Länge und die Breite desselben nicht qualitativ, sondern lediglich annähernd als Anhaltswerte qualitativ bestimmt werden.

Bevorzugt ist es vorgesehen, die einzelnen Wäschestücke mit definierten, gleichen Abständen der Klammerwagen und damit der von diesen gehaltenen gegenüberliegenden Ecken der jeweilige Kante oder des Randes an einer einzigen Messeinrichtung vorbeizutransportieren. Infolge des definierten Abstands der Klammerwagen und damit auch der Ecken des Randes des Wäschestücks können von der gemessenen Tiefe des Durchhangs bzw. der Schlaufe Rückschlüsse auf die Breite des vermessenen Wäschestücks mindestens annäherungsweise gezogen werden. Das Gleiche gilt auch aufgrund des bei der Messung stets gleichen Abstands der Ecken für die unterste Stelle des Wäschestücks. Von der gemessenen untersten Stelle bzw. Ecke kann deshalb die Länge des Wäschestücks mindestens annäherungsweise ermittelt werden.

Vorzugsweise können die Länge und Breite des Wäschestücks nach dem erfindungsgemäßen Verfahren mit verhältnismäßig großer Annäherung bestimmt werden, wenn in die Messwerte der bekannte, gleich bleibende Abstand der Ecken des Wäschestücks aufgrund definierter Abstände der die Ecken haltenden Klammerwagen einbezogen wird. Rechnerisch lassen sich dann die Länge und die Breite des jeweiligen Wäschestücks mit großer Annäherung ermitteln.

Bei einer vorteilhaften Ausgestaltung des Verfahrens wird als Messeinrichtung eine Linienmesseinrichtung verwendet. Beispielsweise kann die Linienmesseinrichtung gebildet sein aus einer auf mindestens einer geraden Linie, insbesondere einer senkrechten Linie, liegenden Reihe aus einer Vielzahl aufeinanderfolgender Sensoren. Mit dieser Linienmesseinrichtung können gleichzeitig mehrere Messwerte eines vor der Messeinrichtung hängenden Wäschestücks aufgenommen werden. Bevorzugt findet die Ermittlung der Messwerte statt, wenn sich das Wäschestück mit der Stelle oder dem Bereich des tiefsten Durchhangs und der tiefsten Stelle der unteren Kante vor der Linienmesseinrichtung befindet. Dann können von der Linienmesseinrichtung sowohl die tiefste Stelle des Durchhangs bzw. der Schlaufe des oberen Rands des Wäschestücks und die tiefste Stelle der unteren Kante des Wäschestücks, insbesondere die tiefste untere Ecke desselben, gemessen werden.

Desweiteren kann erfindungsgemäß vorgesehen sein, dass von mit benachbarten Ecken einer Kante bzw. eines Randes an Klammerwagen hängenden Wäschestücken zu einer Behandlungseinrichtung transporteirt werden, indem benachbarte Klammerwagen aufeinanderfolgender Wäschestücke paarweise von einer Aufteileinrichtung jeweils einem Mitnehmer eines Klinkenförderers bereitgestellt werden. Nachdem anfänglich ein erster Klammerwagen, an dem die vordere Ecke eines ersten Wäschestücke hängt, allein von der Aufteileinrichtung dem jeweiligen Mitnehmer zugeführt wird, werden anschließend immer zwei benachbarte Ecken aufeinanderfolgender Wäschestücke haltende Klammerwagen gleichzeitig, vorzugsweise aufeinanderfolgend, jeweils einem Mitnehmer des Klinkenförderers bereitgestellt.

Bevorzugt werden jeweils zwei benachbarte Ecken aufeinanderfolgender Wäschestücke haltende hintereinander laufende Klammerwagen gemeinsam, und zwar vorzugsweise mit gegenseitigem Kontakt, von jeweils einem einzigen Mitnehmer zusammen längs der Schiene weitertransportiert. Dadurch transportiert nur ein Mitnehmer gleichzeitig zwei Klammerwagen.

Es ist insbesondere vorgesehen, die Klammerwagen am jeweilige Mitnehmer längs einer in Transportrichtung ansteigenden, schrägen Schiene weiter zu transportieren. Dadurch werden von einem Mitnehmer (abgesehen vom ersten Klammerwagen des ersten Wäschestückes) immer zwei Klammerwagen entlang der Schiene verfahren. Die jeweils zwei sich berührenden Klammerwagen werden so paarweise von immer nur einem einzigen Mitnehmer vor sich her geschoben längs der schräg ansteigenden Schiene. Das führt zu einem kontrollierten Weitertransport des jeweiligen Klammerwagenpaars.

Eine vorteilhafte Weiterbildung des Verfahrens sieht es vor, benachbarte Ecken der Kante des jeweiligen Wäschestücks haltende Klammerwagen von aufeinanderfolgenden, beabstandeten Mitnehmern längs der Schiene weiterzutransportieren. Dabei weisen alle Mitnehmer des der Schiene zugeordneten Klinkenförderers einen definierten, gleichen und auch gleich bleibenden Abstand auf. Aufgrund dieser Verfahrensweise ist sichergestellt, dass während des Transport längs der Schiene die gegenüberliegende Ecken des vorzugsweise oberen Randes oder der oberen Kante des Wäschestücks haltenden Klammerwagen immer den gleichen Abstand aufweisen, obwohl jeder Mitnehmer stets zwei Klammerwagen als Klammerwagenpaar vor sich herschiebt, weil die, insbesondere jeder, Mitnehmer zwei Klammerwagen unterschiedlicher Wäschestücke weitertransportieren. Durch den gleichen Abstand der benachbarte Ecken der Kante oder des Randes jedes Wäschestücks haltenden Klammerwagen entsteht unter den Klammerwagen ein definierter Durchhang, nämlich eine Schlaufe, jedes Wäschestücks. Dieser Durchhang bzw. diese Schlaufe ist bei gleichen oder sortengleichen Wäschestücken stets gleich groß, bei unterschiedlichen Wäschestücken, vor allem Wäschestücken anderer Sorten, aber verschieden groß.

Nachfolgend wird ein bevorzugtes Ausführungsbeispiel der Erfindung anhand der Zeichnung näher erläutert. In dieser zeigen:
- Fig. 1: einen Teil einer Vorrichtung zum Zuführen von Wäschestücken zu einer Behand lungseinrichtung,
- Fig. 2: eine Darstellung analog zur Fig. 1 ohne an Klammerwagen hängende Wäschestücke sowie mit nicht dargestellter Schiene, an der die Klammerwagen verfahrbar sind, und

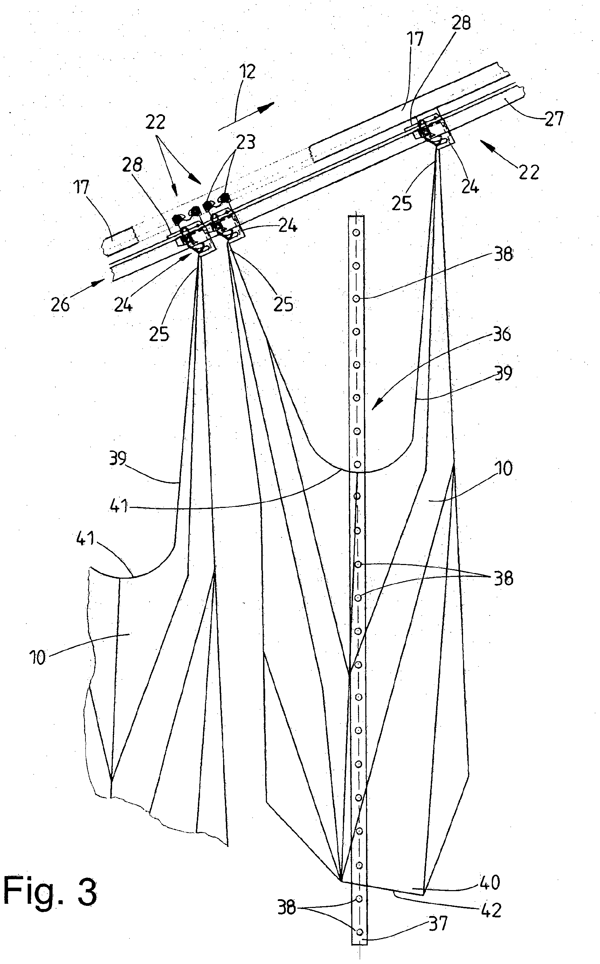

- Fig. 3: eine vergrößerte Einzelheit III der Fig. 1.

Die Figuren zeigen einen Teil einer Vorrichtung zum Zuführen von Wäschestücken 10 zu einer nicht gezeigten Behandlungseinrichtung, beispielsweise einer Eingabemaschine, zum ausgebreiteten Zuführen der Wäschestücke zu einer Mangel. Die Vorrichtung verfügt auch über einen in den Figuren ebenfalls nicht gezeigten Speicher aus mehreren Speicherstrecken, wobei jede Speicherstrecke zur Aufnahme mehrerer Wäschestücke 10 einer gleichen Sorte dient. Im Speicher werden die Wäschestücke 10 dann sortenrein getrennt zwischengespeichert bis zum Weitertransport an die Eingabemaschine.

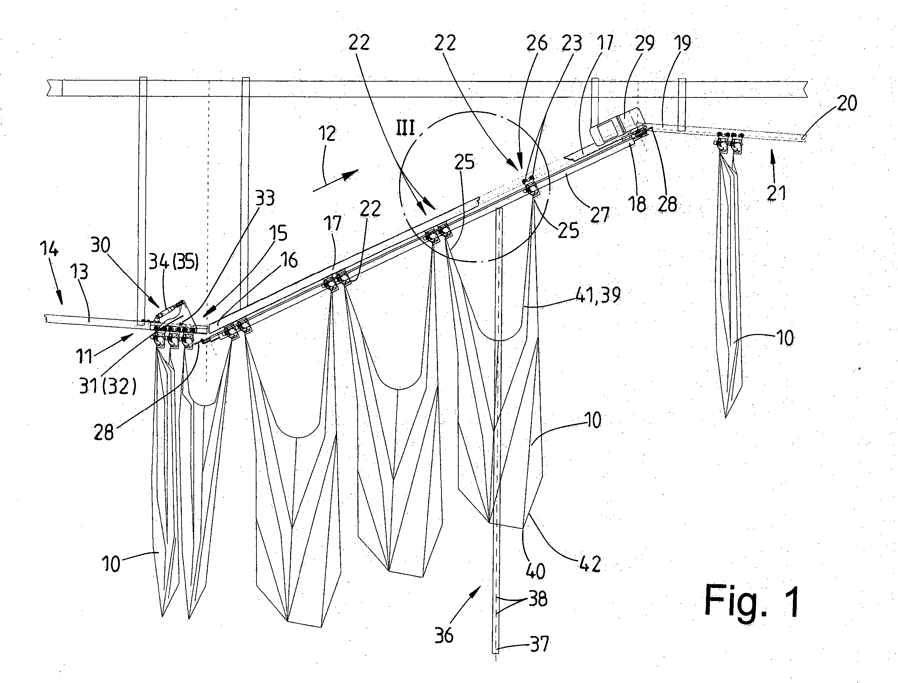

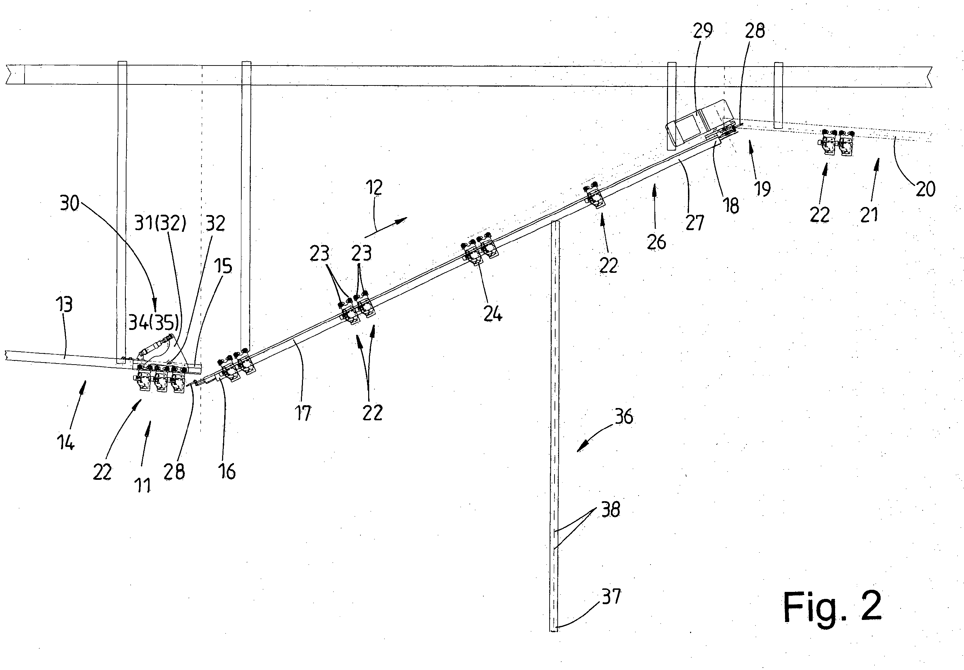

In den Fig. 1 und 2 ist ein Endbereich 11 einer in Transportrichtung 12 leicht geneigt verlaufenden Schiene 13 gezeigt, die einen Zuförderer 14 bildet und Bestandteil derselben ist. An ein Ende 15 der Schiene 13 schließt im Wesentlichen übergangslos, aber unter einem stumpfen Winkel, der Anfang 16 einer weiteren Schiene 17 an. Diese Schiene 17 läuft vom Anfang 16 zum gegenüberliegenden Ende 18 ansteigend. An das Ende der Schiene 17 schließt ein Anfang einer weiteren Schiene 20 an, die Bestandteil eines in Transportrichtung 12 abwärts geneigten Abförderers 21 sein kann. Vom Abförderer 21 gelangen die Wäschestücke 10 in den nicht gezeigten Speicher, und zwar sortenrein getrennt in eine zutreffende von mehreren vorzugsweise parallelen Speicherstrecken.

In bzw. an den Schienen 13, 17 und 20 sind untereinander gleich ausgebildete Klammerwagen 22 verfahrbar. Jeder Klammerwagen 22 verfügt über vier Laufräder 23, wobei jeweils zwei Laufräder 23 den Enden einer Achse zugeordnet sind. So sind je zwei Laufräder 23 auf zwei parallel quer zur Transportrichtung 12 verlaufende horizontale Achsen verteilt. Das Laufwerk des Klammerwagens 22 ist dadurch nach Art einer Tandemachse ausgebildet. Die Laufräder 23 an den beiden in Transportrichtung 12 hintereinanderliegenden Achsen jedes Klammerwagens 22 laufen entweder in den einen entsprechenden Querschnitt aufweisenden Schienen 13, 17 bzw. 20 oder außerhalb der Schienen 13, 17, 20, Unterhalb der Laufräder 23 weist jeder Klammerwagen 22 eine Klammer 24 zur Aufnahme einer Ecke 25 eines Wäschestücks 10 auf. Die Klammern 24 der Klammerwagen 22 befinden sich außerhalb und unterhalb der jeweiligen Schiene 13, 17 und 20. In die jeweilige Klammer 24 wird bevorzugt manuell eine Ecke 25 eines Wäschestücks 10 an einer nicht gezeigten Beladestation, die sich beispielsweise am Anfang der Schiene 13 befinden kann, eingehängt.

Infolge der in Transportrichtung 12 abwärts geneigten Schienen 13 und 20 laufen die Klammerwagen 22 mit den daran hängenden Wäschestücken 10 selbsttätig schwerkraftbedingt in Transportrichtung 12 längs der Schienen 13 und 20. Aufgrund des Anstiegs der Schiene 17 werden die Klammerwagen 22 mit den daran hängenden Wäschestücken 10 längs dieser Schiene 17 in Transportrichtung 12 angetrieben, und zwar vorzugsweise kontinuierlich. Dazu ist der Schiene 17 ein sogenannter Klinkenförderer 26 zugeordnet. Der einen Stetigförderer darstellende Klinkenförderer 26 ist im gezeigten Ausführungsbeispiel dicht unterhalb der Schiene 17 angeordnet und verläuft parallel zu derselben, jedoch mit außermittigem Versatz zur Längsrichtung der Schiene 17.

Der Klinkenförderer 26 verfügt über einen umlaufenden Förderstrang 27, wobei es sich um einen Riemen, eine Kette, ein Seil oder einen flachen Gurt handeln kann, an dem in gleichen, regelmäßigen Abständen mehrere Klinken bildende Mitnehmer 28 fest angeordnet sind. Der umlaufende Förderstrang 27 des Klinkenförderers 26 ist mit einem Trum unterhalb der Schiene 17 angeordnet, und zwar bevorzugt mit parallelem Abstand neben einer vertikalen Längsmittelebene durch die Schiene 17. Mit diesem Trum des Förderstrangs 27, der sich längs der gesamten Schiene 17 erstreckt, erfolgt ein ansteigender Weitertransport der Klammerwagen 22 entlang der Schiene 17 in Transportrichtung 12. Die gleich ausgebildeten Mitnehmer 28 am Förderstrang 27 stehen zur gleichen Seite des der Schiene 17 zugeordneten Trums des Förderstrangs 27 ab, und zwar etwa horizontal gerichtet. Dabei durchqueren die Mitnehmer 28 die vertikale Längsmittelebene der Schiene 17. Das führt dazu, dass die Mitnehmer 28 die Laufbahn der Klammerwagen 22 längs der ansteigenden Schiene 17 schneiden und dadurch die Klammerwagen 22 entlang der Schiene 17 in Transportrichtung 12 ansteigend vor sich herschieben. Der Förderstrang 27 des Klinkenförderers 26 wird umlaufend angetrieben von einem Getriebemotor 29 oberhalb des Endes 18 der Schiene 17.

Das Ende 15 der Schiene 13 des Zuführförderers 14 und der Anfang 16 der nachfolgenden Schiene 17 folgen in Transportrichtung 12 fluchtend aufeinander, so dass auf die Schiene 13 die Schiene 17 im Wesentlichen übergangslos folgt und die Laufräder 23 der Klammerwagen 22 aus der Schiene 13 in die Schiene 17 einlaufen können. Es ist aber auch denkbar, zwischen dem Ende 15 der Schiene 13 und dem Anfang 16 der Schiene 17 ein Übergangsstück vorzusehen, das die Laufräder 23 der Klammerwagen 22 beim Übergang von der Schiene 13 in die Schiene 17 führt.

Eine halbkreisförmige Umlenkung des Förderstrangs 27 zwischen dem leer laufenden weiter von der Schiene 17 beabstandeten Trum zum die Klammerwagen 22 längs der Schiene 17 weiterfördernden Trum ist im Bereich des Anfangs 16 der Schiene 17 so positioniert, dass stets ein außenseitig abstehender Mitnehmer 28 des Förderstrangs 27 hinter anfangs einen und anschließend immer zwei direkt aufeinanderfolgende, sich berührende Klammerwagen 22 greift und diese in ansteigender Transportrichtung 12 längs der Schiene 17 vor sich herschiebt. Die Mitnehmer 28 hintergreifen dabei den sich unterhalb der Schiene 17 befindenden Teil des Klammerwagens 22, und zwar die Rückseite der jeweiligen Klammer 24 dicht unterhalb der Schiene 17.

Dem Ende der Schiene 13 ist eine Aufteileinrichtung 30 zugeordnet. Hierbei handelt es sich um eine Art Vereinzeler der Klammerwagen 22, der aber in besonderer Weise ausgebildet ist, nämlich zum Ausschleusen entweder nur eines einzelnen Klammerwagens 22 oder zwei aufeinanderfolgender Klammerwagen 22 aus der Schiene 13. Mit anderen Worten dient die Aufteileinrichtung 30 zu einer besonderen Art der Vereinzelung der Klammerwagen 22, die es zulässt, wahlweise nur einen einzigen oder zwei direkt aufeinanderfolgende Klammerwagen 22 gleichzeitig zu hintergreifen und dadurch von den darauffolgenden Klammerwagen 22, die im Bereich des Endes 15 der Schiene 13 zusammengelaufen sind, zu vereinzeln. Die wahlweise einzeln oder paarweise vereinzelten und ausgeschleusten Klammerwagen 22 werden dann von einem Mitnehmer 28 in die Schiene 17 eingeschleust und längs derselben von jeweils einem Mitnehmer 28 vor sich hergeschoben.

Damit wahlweise von der Aufteileinrichtung 30 ein einzelner Klammerwagen 22 oder auch gleichzeitig zwei Klammerwagen 22 vereinzelbar bzw. ausschleusbar sind, ist die Aufteileinrichtung 30 in besonderer Weise ausgebildet. Die Aufteileinrichtung 30 verfügt dazu über zwei parallele, dicht nebeneinanderliegende Klinken 31 und 32, die um eine gemeinsame horizontale Achse 33 in jeweils einer von zwei parallelen vertikalen Ebenen, die sich in Transportrichtung 12 erstrecken, verschwenkbar sind. Das Verschwenken der Klinken 31, 32 erfolgt durch einen der jeweiligen Klinken 31, 32 zugeordneten Aktuator 34, 35, beispielsweise jeweils einen Pneumatikzylinder. In den Fig. 1 und 2 ist nur eine vordere Klinke 31 mit dem ihr zugeordneten Aktuator 34 gezeigt. Die zweite Klinke 32 und der dazugehörende Aktuator 35 befinden sich etwa deckungsgleich dahinter. Die in den Fig. 1 und 2 gezeigte Klinke 31 ist ausgebildet, um gleichzeitig zwei unter gegenseitiger Berührung in Transportrichtung 12 hintereinanderliegende Klammerwagen 22 zu vereinzeln bzw. aus dem Ende 15 der Schiene 13 des Zuförderers 14 auszuschleusen und die dahinterliegenden Klammerwagen 22 zurückzuhalten. Die nicht gezeigte hintere Klinke 32 ist so ausgebildet, dass sie nur den vordersten Klammerwagen 22 zum Vereinzeln freigibt und den nachfolgenden zweiten Klammerwagen zurückhält.

Im Bereich der Schiene 17, und zwar etwa in einem mittleren Bereich derselben, ist eine zum Vermessen jeweils eines einzelnen Wäschestücks 10 dienende Linienmesseinrichtung 36 fest unterhalb der Schiene 17 angeordnet. Die Linienmesseinrichtung 36 befindet sich in senkrechter Ausrichtung etwas neben der sich durch die Schiene 17 erstreckenden vertikalen Längsmittelebene, und zwar derart, dass frei von den Klammerwagen 22 herunterhängende Wäschestücke 10 einzeln mit möglichst geringem Abstand an der Linienmesseinrichtung 36 vorbeilaufen können, aber ohne diese zu berühren. Die Linienmesseinrichtung 36 weist eine solche Länge auf, dass ihr unteres Ende 37 tiefer liegt als die tiefste zu erwartende Stelle des größtmöglichen Wäschestücks 10.

Gebildet ist die Linienmesseinrichtung 36 im vorliegenden Fall aus einer Vielzahl von Sensoren 38, die in gleichmäßigem Abstand längs einer vertikalen Reihe angeordnet sind. Diese vertikale Reihe erstreckt sich in Längsrichtung der Linienmesseinrichtung 36. Bei jedem der gleichen Sensoren 38 kann es sich um einen solchen handeln, der optisch oder auch pneumatisch ermittelt, ob seine horizontale, quer zur Transportrichtung 12 verlaufende Messachse von einem Wäschestück 10 durchquert oder abgedeckt wird oder das Wäschestück 10 ihn freilässt, also die Messachse nicht abgedeckt oder durchquert. Es lassen sich so zum einen der Durchhang einer oberen Kante 39 des an benachbarten Ecken 25 vom Klammerwagen 22 gehaltenen Wäschestücks 10 und andererseits die tiefste Stelle 40 des von den Klammerwagen 22 herunterhängenden Wäschestücks 10 gleichzeitig beim Vorbeilaufen des jeweiligen Wäschestücks 10 an der Linienmesseinrichtung 36 messen.

Zur Messung des Durchhangs der oberen Kante 39 des Wäschestücks 10 wird die größte Tiefe einer vor der durchhängenden Kante 39 gebildeten Schlaufe 41 ermittelt durch Feststellung des Maximalwerts des Abstands der Schlaufe 41 in der von den Klammerwagen 22 herunterhängenden oberen Kante 39 des Wäschestücks 10 vom oberen Ende der Linienmesseinrichtung 36. Genauso wird die tiefste Stelle 40 oder unterste Ecke ermittelt, indem der größte gemessene Abstand der unteren Kante 42 des Wäschestücks 10 vom oberen Ende der Linienmesseinrichtung 36 beim Vorbeitransportieren dieses Wäschestücks 10 an der Linienmesseinrichtung 36 gemessen wird.

Nachfolgend werden die erfindungsgemäßen Verfahren unter Bezugnahme auf die zuvor beschriebene Vorrichtung näher erläutert:
Die Wäschestücke 10 werden einzeln an mindestens einer nicht gezeigten Beladestation mit gegenüberliegenden Ecken 25 der oberen Kante 39 oder des oberen Randes in Klammern 24 aufeinanderfolgender Klammerwagen 22 eingehängt. Durch Schwerkraftförderung laufen die Klammerwagen 22 mit den daran hängenden Wäschestücken 10 selbsttätig in Transportrichtung 12 entlang der geneigten Schiene 13 zum Ende 15 derselben. Hier sammeln sich die Klammerwagen 22 mit den daran hängenden Wäschestücken 10 vor der Aufteileinrichtung 30.

Von der Aufteileinrichtung 30 werden die Klammerwagen 22 mit den daran hängenden Wäschestücken 10 gezielt einzeln oder paarweise aus der Schiene 13 ausgeschleust und vom Ende 15 der Schiene 13 an den Anfang 16 der Schiene 17 überführt. Die Aufteileinrichtung 30 ist so ausgebildet, dass sie wahlweise nur einen Klammerwagen 22 vereinzelt oder ein Paar von zwei unmittelbar aufeinanderfolgend sich berührenden Klammerwagen 22. Das Ausschleusen nur eines Klammerwagens 22 oder eines Paars zweier Klammerwagen 22 wird von der Aufteileinrichtung 30 durch wahlweiser Betätigung der einen Klinke 31 oder der anderen Klinke 32 durch den ihr zugeordneten Aktuator 34 bzw. 35 vorgenommen.

Konkret wird so vorgegangen, dass der die in Transportrichtung 12 voraneilende erste Ecke 25 des ersten Wäschestücks 10 haltende Klammerwagen 22 von der entsprechend gesteuerten Aufteileinrichtung 30 einzeln ausgeschleust und von einem Mitnehmer 28 des Klinkenförderers 26 längs der Schiene 17 verfahren wird. Alle anderen Klammerwagen 22 werden von der Aufteileinrichtung 30 paarweise ausgeschleust, und zwar der Klammerwagen 22, der die in Transportrichtung 12 nachlaufende Ecke 25 eines vorderen Wäschestücks 10 hält und der sich unmittelbar dahinter befindliche Klammerwagen 22 mit der in Transportrichtung 12 vorauslaufenden Ecke 25 des nächsten Wäschestücks 10. Es werden nach dem anfänglichen Ausschleusen nur eines Klammerwagens 22 solange immer zwei Klammerwagen 22 gleichzeitig paarweise ausgeschleust, bis das letzte Wäschestück 10 an der Reihe ist. Hier wird der die hinterste Ecke 25 haltende Klammerwagen 22 wieder einzeln ausgeschleust.

Infolge des gleichmäßigen, unveränderten Abstands der Mitnehmer 28 am Förderstrang 27 des Klinkenförderers 26 weisen beide Ecken 25 der in einer Schlaufe 41 durchhängenden oberen Kante 39 jedes Wäschestücks 10 einen festgelegten, unveränderbaren gleichen Abstand auf. Dadurch werden die Wäschestücke 10 stets mit festgelegtem, gleichen Abstand der Ecken 25 der oberen Kante 39 längs der Schiene 17 an der Linienmesseinrichtung 36 vorbeitransportiert. Dieses erfolgt vorzugsweise kontinuierlich, so dass die Messung während des Vorbeitransports jeweils eines einzelnen Wäschestücks 10 an der Linienmesseinrichtung 36 ununterbrochen vorgenommen wird.

Während des Vorbeibewegens eines einzelnen mit gegenüberliegenden Ecken 25 an zwei Klammerwagen 22 hängenden Wäschestücks 10 an der Linienmesseinrichtung 36 werden von dieser die tiefste bzw. unterste Stelle der unteren Kante 42 des von den Klammerwagen 22 herunterhängenden Wäschestücks 10 und die tiefste Stelle der Schlaufe 41 der oberen Kante 39 des Wäschestücks 10 ermittelt. Dabei weisen die die beiden Ecken 25 der oberen Kante 39 des Wäschestücks 10 haltenden Klammerwagen 22 einen unveränderlichen Abstand auf, der auch bei allen andere Wäschestücke 10 haltenden Klammerwagen 22 gleich groß ist. Die Messungen erfolgen derart, dass beim Vorbeibewegen eines Wäschestücks 10 an der Linienmesseinrichtung 36 von derselben fortlaufend die herunterhängende untere Kante 42 und die obere Kante 39 im Bereich der Schlaufe 41 hinsichtlich des Abstands vom oberen Ende der Linienmesseinrichtung 36 ermittelt werden. Durch Vergleich aufeinanderfolgender Messwerte der oberen Kante 39 und der unteren Kante 42 des jeweiligen Wäschestücks 10 lassen sich die maximalen Abstände der oberen Kante 39 und der unteren Kante 42 vom oberen Ende der Linienmesseinrichtung 36 ermitteln. Diese Maximalabstände ergeben je einen Messwert für die tiefste Stelle der Schlaufe 41 und die unterste bzw. tiefste Stelle 40 der unteren Kante 42 des Wäschestücks 10. Vorzugsweise werden diese Messwerte in einem Rechner oder eine Steuerung für Weichen der einzelnen Speicherstrecken des Speichers zum Sortieren der Wäschestücke 10 verarbeitet bzw, ausgewertet.

Aus dem Messwert für die tiefste Stelle der Schlaufe 41 der oberen Kante 39 einerseits und der tiefsten Stelle 40 der unteren Kante 42 andererseits wird durch Quotientenbildung ein Verhältnis gebildet, das auf das Längen-Breitenverhältnis des jeweils an der Linienmesseinrichtung 36 vermessenen Wäschestücks 10 schließen lässt. Anhand dieses Verhältniswerts bzw. Längen-Breitenverhältnisses lässt sich das jeweilige Wäschestück 10 identifizieren, insbesondere der Art nach, beispielsweise ob es sich beim vermessenen Wäschestück 10 um ein Bettlaken, einen Bettbezug, ein Kopfkissenbezug oder eine Tischdecke handelt.

Die Längen-Breitenverhältnisse bzw. der Verhältniswert sind als Referenzwerte für jedes unterschiedlich vorkommende Wäschestück 10 im Rechner oder der Steuerung hinterlegt, so dass durch Vergleich der gemessenen Längen-Breitenverhältnisse oder Verhältniswerte mit den hinterlegten Referenzwerten die Steuerung oder der Rechner erkennen können, um welche Art Wäschestück es sich handelt. Danach kann dann eine sortenreine Speicherung der Wäschestücke 10 der jeweiligen Art, beispielsweise Bettbezüge, der gleichen Speicherstrecke des Speichers erfolgen. Die Wäschestücke 10 können dann sortiert aus der jeweiligen Speicherstrecke der Behandlungsvorrichtung, beispielsweise einer Eingabemaschine vor einer Mangel, zugeführt werden.

**Bezugszeichenliste:**

| | | | |
|---|---|---|---|
| 10 | Wäschestück | 36 | Linienmesseinrichtung |
| 11 | Endbereich | 37 | Ende |
| 12 | Transportrichtung | 38 | Sensor |
| 13 | Schiene | 39 | obere Kante |
| 14 | Zuförderer | 40 | tiefste Stelle |
| 15 | Ende | 41 | Schlaufe |
| 16 | Anfang | 42 | untere Kante |
| 17 | Schiene | | |
| 18 | Ende | | |
| 19 | Anfang | | |
| 20 | Schiene | | |
| 21 | Abförderer | | |
| 22 | Klammerwagen | | |
| 23 | Laufrad | | |
| 24 | Klammer | | |
| 25 | Ecke | | |
| 26 | Klinkenförderer | | |
| 27 | Förderstrang | | |
| 28 | Mitnehmer | | |
| 29 | Getriebemotor | | |
| 30 | Aufteileinrichtung | | |
| 31 | Klinke | | |
| 32 | Klinke | | |
| 33 | Achse | | |
| 34 | Aktuator | | |
| 35 | Aktuator | | |

## Patentansprüche

1. Verfahren zum Vermessen von Wäschestücken (10), wobei die Wäschestücke (10) einzeln mit gegenüberliegenden Ecken (25) einer Kante (39) unter in längs einer Schiene (17) verfahrbaren Klammerwagen (22) hängend an einer Messeinrichtung vorbeitransportiert werden, **dadurch gekennzeichnet, dass** von der Messeinrichtung der Durchhang der mit benachbarten Ecken (25) in den Klammerwagen (22) gehaltenen vorzugsweise oberen Kante (39) des Wäschestücks (10) und eine tiefste Stelle (40) des von den Klammerwagen (22) herunterhängenden Wäschestücks (10) gemessen werden, wobei die Wäschestücke (10) mit einem definierten, gleich bleibenden Abstand zwischen den benachbarte Ecken (25) des Rands oder Kante (39) eines gleichen Wäschestücks (10) haltenden Klammerwagen (22) an der Messeinrichtung vorbeitransportiert werden.

2. Verfahren nach Anspruch 1, **dadurch gekennzeichnet, dass** die Messeinrichtung gleichzeitig den Durchhang, insbesondere die Tiefe des Durchhangs, der oberen Kante (39) des jeweiligen Wäschestücks (10) und die tiefste Stelle insbesondere der unteren Kante (42) des gleichen Wäschestücks (10) misst.

3. Verfahren nach Anspruch 1 oder 2, **dadurch gekennzeichnet, dass** der Messwert für den Durchhang der oberen Kante (39) des Wäschestücks (10) und der Messwert der tiefsten Stelle (40) der unteren Kante (42) des Wäschestücks (10) ins Verhältnis gesetzt werden und der dadurch entstehende Verhältniswert herangezogen wird zur Ermittlung der Art des Wäschestücks (10) und/oder zur Identifikation des Wäschestücks (10).

4. Verfahren nach einem der vorhergehenden Ansprüche, **dadurch gekennzeichnet, dass** die einzelnen Wäschestücke (10) mit definiertem, gleichen Abstand der Klammerwagen (22) und der von diesen gehaltenen, gegenüberliegenden Ecken (25) der oberen Kante (39) an der Messeinrichtung vorbeitransportiert werden.

5. Verfahren nach einem der vorhergehenden Ansprüche, **dadurch gekennzeichnet, dass** als Messeinrichtung eine Linienmesseinrichtung (36) mit vorzugsweise einer auf mindestens einer geraden, insbesondere senkrechten Linie liegenden Reihe aus einer Vielzahl von Sensoren (38) verwendet wird.

6. Verfahren nach einem der vorhergehenden Ansprüche, **dadurch gekennzeichnet, dass** zum Transport der Wäschestücken (10) zu einer Behandlungseinrichtung, die Klammerwagen (22) entlang der Schiene (17) von längs der Schiene (17) bewegten Mitnehmern (28) verfahren werden, wobei die Klammerwagen (22) am Anfang (16) der Schiene (17) von einer Aufteileinrichtung (30) den Mitnehmern (28) bereitgestellt werden, und wobei benachbarte Klammerwagen (22) aufeinanderfolgender Wäschestücke (10) paarweise von der Aufteileinrichtung (30) jeweils einem Mitnehmer (28) bereitgestellt werden,

7. Verfahren nach einem der vorhergehenden Ansprüche, **dadurch gekennzeichnet, dass** benachbarte Ecken (25) zweier aufeinanderfolgender Wäschestücke (10) haltende, aufeinanderfolgende Klammerwagen (22) gemeinsam hintereinander von einem Mitnehmer (28) längs der Schiene (17) weitertransportiert werden, vorzugsweise in Richtung des Anstiegs der schräg verlaufenden Schiene (17).

8. Verfahren nach einem der vorhergehenden Ansprüche, **dadurch gekennzeichnet, dass** die benachbarte Ecken (25) der Kante (39) des jeweiligen Wäschestücks (10) haltende Klammerwagen (22) von zwei aufeinanderfolgenden, beabstandeten Mitnehmern (28) längs der Schiene (17) weitertransportiert werden.

## Claims

1. Method of measuring items of laundry (10), wherein the items of laundry (10) are transported past a measuring device individually with opposite corners (25) of one edge (39) hanging below in clip carriages (22) which can be displaced along a rail (17), **characterized in that** the measuring device measures the sagging of the preferably upper edge (39) of the item of laundry (10), which is retained in the clip carriages (22) by adjacent corners (25), and a lowermost location (40) of the item of laundry (10) hanging down from the clip carriages (22). wherein the items of laundry (10) are transported past the measuring device with a defined, constant distance between the clip carriages (22) retaining adjacent corners (25) of the periphery or edge (39) of an identical item of laundry (10).

2. Method according to claim 1, **characterized in that** the measuring device measures, at the same time, the sagging, in particular the depth of the sagging, of the upper edge (39) of the respective item of laundry (10) and the lowermost location in particular of the lower edge (42) of the same item of laundry (10).

3. Method according to claim 1or 2, **characterized in that** the measured value for the sagging of the upper edge (39) of the item of laundry (10) and the measured value for the lowermost location (40) of the lower edge (42) of the item of laundry (10) are set in relation to one another, and the resulting ratio is used for determining the type of item of laundry (10) and/or for identifying the item of laundry (10).

4. Method according to one of the preceding claims, **characterized in that** the individual items of laundry (10) are transported past the measuring device with a defined, identical distance between the clip carriages (22) and the opposite corners (25) of the upper edge (39) which are retained by said clip carriages (22).

5. Method according to one of the preceding claims, **characterized in that** the measuring device used is a line-measuring device (36) with preferably a row made up of a multiplicity of sensors (38) located on at least one straight, in particular vertical, line.

6. Method according to one of the preceding claims, **characterized in that,** for the transport of the items of laundry (10) to a treatment device, the clip carriages (22) are displaced along a rail (17) by drivers (28) which are moved along the rail (17), wherein the clip carriages (22) are supplied to the driver (28) by a separating device (30) at the start (16) of the rail (17), and wherein adjacent clip carriages (22) of successive items of laundry (10) are supplied in pairs by the separating device (30) to a driver (28) in each case.

7. Method according to one of the preceding claims, **characterized in that** successive clip carriages (22) holding adjacent corners (25) of two successive items of laundry (10) are further transported one behind the other together along the rail (17) by a driver (28), preferably in the direction of the upward slope of the obliquely running rail (17).

8. Method according to one of the preceding claims, **characterized in that** the clip carriages (22) holding adjacent corners (25) of the edge (39) of the respective item of laundry (10) are further transported along the rail (17) by two successive and spaced-apart drivers (28).

## Revendications

1. Procédé de mesure de pièces de linge (10), les pièces de linge (10) étant passées individuellement devant un dispositif de mesure avec des coins opposés (25) d'un bord (39) en étant suspendues dans des chariots à pinces (22) déplaçables le long d'un rail (17), **caractérisé en ce que** l'affaissement de préférence du bord supérieur (39) de la pièce de linge (10), qui est maintenu dans les chariots à pinces (22) par des coins adjacents (25) et le point le plus bas (40) de la pièce de linge (10) pendant des chariots à pinces (22) sont mesurés par un dispositif de mesure, les pièces de linge (10) étant passées devant le dispositif de mesure à une distance constante définie entre les chariots à pince (22) maintenant les coins adjacents (25) de la bordure ou du bord (39) d'une même pièce de linge (10).

2. Procédé selon la revendication 1, **caractérisé en ce que** le dispositif de mesure mesure à la fois l'affaissement, en particulier la profondeur de l'affaissement, du bord supérieur (39) de la pièce de linge respective (10) et le point le plus bas, en particulier le bord inférieur (42), de la même la pièce de linge (10) .

3. Procédé selon la revendication 1 ou 2, **caractérisé en ce que** l'on définit le rapport entre la valeur de mesure de l'affaissement du bord supérieur (39) de la pièce de linge (10) et la valeur de mesure du point le plus bas (40) du bord inférieur (42) de la pièce de linge (10) et **en ce que** l'on utilise la valeur de rapport résultante pour déterminer le type de la pièce de linge (10) et/ou pour identifier la pièce de linge (10) .

4. Procédé selon l'une des revendications précédentes, **caractérisé en ce que** les différentes pièces de linge (10) sont passées devant le dispositif de mesure à une même distance définie des chariots à pinces (22) et des coins opposés (25), maintenus par ceux-ci, du bord supérieur (39).

5. Procédé selon l'une des revendications précédentes, **caractérisé en ce que** le dispositif de mesure utilisé est un dispositif de mesure de lignes (36) qui comprend de préférence une rangée d'une pluralité de capteurs (38) qui se trouve sur au moins une ligne droite, en particulier verticale.

6. Procédé selon l'une des revendications précédentes, **caractérisé en ce que** pour transporter les pièces de linge (10) vers un dispositif de traitement, les chariots à pinces (22) sont déplacés le long du rail (17) par des entraîneurs (28) déplacés le long du rail (17), les chariots à pinces (22) étant mis à disposition des entraîneurs (28) au début (16) du rail (17) par un dispositif de distribution (30), et chacun des chariots à pinces adjacents (22) de pièces de linge successives (10) étant mis à disposition par paires d'un entraîneur (28) par le dispositif de distribution (30).

7. Procédé selon l'une des revendications précédentes, **caractérisé en ce que** des chariots à pinces (22) successifs, maintenant des coins adjacents (25) de deux pièces de linge successives (10), sont continués d'être transportés ensemble les uns derrière les autres par un entraîneur (28) le long du rail (17), de préférence dans le sens de la montée du rail s'étendant de manière inclinée (17).

8. Procédé selon l'une des revendications précédentes, **caractérisé en ce que** des chariots à pinces (22) maintenant les coins adjacents (25) du bord (39) de la pièce de linge respective (10) sont continués d'être transportés par deux entraîneurs (28) distants successifs le long du rail (17).
